# EUROPÄISCHE PATENTSCHRIFT

(11) **EP 3 855 735 B1**
(45) Veröffentlichungstag und Bekanntmachung des Hinweises auf die Patenterteilung: **10.08.2022**
(21) Anmeldenummer: 21151108.4
(22) Anmeldetag: 12.01.2021
(51) Int. Cl.: H04N 17/00, F16P 3/14, B25J 9/16, H04N 5/335

(54) **ABSICHERN EINER MASCHINE**
SECURING OF A MACHINE
MISE EN SÉCURITÉ D'UNE MACHINE

(30) Priorität: 27.01.2020 DE 102020101794
(43) Veröffentlichungstag der Anmeldung: 28.07.2021
(73) Patentinhaber: SICK AG, 79183 Waldkirch (DE)
(72) Erfinder: Müller, Dr. Romain, 79252 Stegen (DE); Hofmann, Dr. Christoph, 79108 Freiburg (DE)

(56) Entgegenhaltungen:
- EP-A1- 1 881 699
- EP-A1- 1 976 264
- WO-A1-2017/048382
- DE-A1-102017 207 792
- DE-A1-102017 212 338
- US-A1- 2015 244 952
- LICHTSTEINER P ET AL: "A 128 x 128 120 dB 15ps Latency Asynchronous Temporal Contrast Vision Sensor", IEEE J. SOLID-STATE CIRCUITS,, Bd. 43, 1. Januar 2008 (2008-01-01), Seiten 566-576, XP002724493,

## Beschreibung

Die Erfindung betrifft einen sicheren optoelektronischen Sensor und ein Verfahren zum Absichern einer Maschine nach dem Oberbegriff von Anspruch 1 beziehungsweise 15.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

Durch den zunehmenden Einsatz von Robotern oder sogenannten Cobots (collaborative robot) im Industriebereich werden Sicherheitsaspekte und Mensch-Roboter-Kollaboration (MRK) immer wichtiger. Relevante Normen in diesem Zusammenhang sind beispielsweise die ISO 10218 für Industrieroboter oder die ISO/TS 15066 für kollaborierende Roboter. MRK erfordert per Definition ein Arbeiten sehr nah am Roboter. Schutzfelder und Sicherheitsabstände sollten folglich möglichst klein bleiben, natürlich unter der Vorgabe, dass die Sicherheit gewährleistet bleibt. Die Normen ISO13854, ISO 13855, ISO 13857 befassen sich mit der Festlegung von Sicherheitsabständen. Eine Bewertung von Objekten und Maschinen bezüglich Geschwindigkeit und gegenseitiger Entfernung wird in den genannten Roboternormen als "Speed and Separation Monitoring" bezeichnet.

In der Sicherheitstechnik eingesetzte Sensoren müssen besonders zuverlässig arbeiten und deshalb in Abhängigkeit von einem angestrebten Sicherheitsniveau oder Performance Level bestimmte Sicherheitsanforderungen erfüllen. Damit befassen sich beispielsweise die Norm EN13849 für Maschinensicherheit und die Gerätenorm IEC61496 oder EN61496 für berührungslos wirkende Schutzeinrichtungen (BWS). Eine typische sichere Systemarchitektur basiert auf einem zweikanaligen redundanten oder diversitär-redundanten Aufbau. Das ist bei Kameras für die Sicherheitstechnik technisch sehr aufwändig, und deshalb wird alternativ eine einkanalige Architektur mit Testung oder Funktionsüberwachung eingesetzt. Dabei wiederum ist ein bestimmter Diagnosedeckungsgrad zu erreichen. Eine mögliche Fehlerquelle stellt der Bildsensor selbst dar, und somit muss die Funktionsüberwachung sicherheitskritische Bildsensorfehler aufdecken.

Die EP 0 902 402 B1 befasst sich mit einer Kamera, die ihren Bildsensor zu Testzwecken blendet und das dabei aufgenommene Bildmuster mit einem in einem Bildspeicher gespeicherten vorgegebenen Bildmuster vergleicht. Eine Kamera nach US 2019/253603 A1 prüft, ob das Blinken einer aufgenommenen blinkenden Lichtquelle erfasst wird.

In der WO 10/78411 A1 wird zu Testzwecken ein dem Bildsensor zugeführtes Objektsbild gezielt dynamisiert. Das kann auf verschiedene Weisen realisiert werden, sei es durch Lichtquellen, eine Verschiebung des Bildsensors oder einer Veränderung einer Aufnahmeoptik im Strahlengang für das Objektbild.

Aus der WO 2015/130570 A1 ist bekannt, Adressfehler eines Bildsensors aufzudecken, indem ein charakteristisches Muster des Bildsensors, der Fixed Pattern Noise, eingelernt und im Betrieb geprüft wird, ob die entsprechenden Ungleichmäßigkeiten an der erwarteten Stelle des Bildsensors auftreten.

In der US 8 730 330 B2 werden einzelne Pixelzeilen und Pixelspalten abgedunkelt, und damit werden Verifikationsbilddaten erzeugt, die mit erwarteten Ausgangssignalen verglichen werden, um die Funktionsfähigkeit des Bildsensors zu prüfen.

Die US 8 953 047 B2 sieht in den Bildsensor integrierte Verifikationsschaltungen vor. Dies macht den Bildsensor aber entsprechend aufwändiger in der Herstellung, und die zusätzlichen Schaltungsteile beanspruchen Fläche auf dem Bildsensor.

In der EP 1 881 699 A1 wird ein Kamerasystem für ein Fahrzeug offenbart. Es wird ein Referenzsignal in einige oder alle Pixel injiziert und ausgelesen, um abnormes Verhalten in den Übertragungspfaden zu erkennen. In diesem Fall wird auf einer Anzeige eine Warnung ausgegeben, dass die betroffene Kamera nicht richtig funktioniert.

Die DE 10 2017 212 338 A1 offenbart ein Verfahren zur Auslösung mindestens einer Sicherheitsfunktion eines Kraftfahrzeugs. Auslöser ist ein Beschleunigungssensor, der eine Kollision erkennt. Zusätzlich werden die Insassen des Kraftfahrzeugs mit einem Dynamic-Vision-Sensor beobachtet. Ein vorläufiges Auslösesignal des Beschleunigungssensors kann anhand der Informationen des Dynamic-Vision-Sensors noch modifiziert werden. Das konkrete Anwendungsbeispiel ist, das Entfaltungsverhalten eines Airbags zu verändern oder diesen gar nicht auszulösen, wenn durch den Airbag wegen einer ungünstigen Haltung der Insassen eine Verletzung droht.

Aus der WO 2017/048382 A1 ist eine Kalibrierung für einen ereignisbasierten Sensor bekannt. Es werden Kalibrationsbilder präsentiert, in denen ein erleuchteter Punkt durch das Bild wandert, und diese Sequenz wird mehrfach wiederholt. Damit werden Kalibrationsparameter gewonnen, insbesondere die intrinsischen Kameraparameter.

Die EP 1 976 264 A1 offenbart ein Verfahren zum Testen der Lichtempfindlichkeit eines CMOS-Chips offenbart.

In der DE 10 2017 207 792 A1 wird ein System für den Außen- und Innenspiegelersatz mit Prüfen einer Wiedergabe einer Videosequenz vorgestellt. Damit soll verhindert werden, dass dem Fahrer fälschlich ein stehendes Bild gezeigt wird.

In jüngerer Zeit ist eine neuartige Kameratechnik entstanden, die sogenannte ereignis- oder eventbasierte Kamera. Sie wird in Anlehnung an den visuellen Cortex auch als neuromorphologische Kamera bezeichnet. Eine herkömmliche Kamera belichtet mit einer regelmäßigen Frame- oder Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen.

In einer ereignisbasierten Kamera gibt es ebenfalls eine Matrix von Pixeln, aber weder eine feste Bildwiederholrate noch ein gemeinsames Auslesen von Pixeln. Stattdessen prüft jedes Pixel einzeln, ob es eine Änderung in der Intensität feststellt. Nur in diesem Fall wird eine Bildinformation ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Die Bilddaten sind für das menschliche Auge nicht so intuitiv zu erfassen, weil die statischen Bildanteile fehlen.

Eine ereignisbasierte Kamera wird beispielsweise in einem Whitepaper der Firma Prophesee beschrieben, das auf deren Internetseite abgerufen werden kann.

Aus der WO 2015/036592 A1, WO 2017/174579 A1 und WO 2018/073379 A1 sind jeweils Pixelschaltkreise für eine ereignisbasierte Kamera bekannt.

Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog.(CVPR), Vol. 1. 2018 stellt Verfahren vor, wie sich aus den Daten einer ereignisbasierten Kamera Bewegung, Entfernungen und optischer Fluss bestimmen lassen. Die US 2013/0335595 A1 offenbart eine Vorrichtung und ein Verfahren zur ereignisbasierten Bildverarbeitung, konkret zur Bestimmung des optischen Flusses. Die Arbeit von Lichtsteiner, P. et. al "A 128 x 128 120 dB 15 µs latency asynchronous temporal contrast vision sensor." IEEE journal of solid-state circuits 43.2 (2008): 566-576 befasst sich ebenfalls mit einem ereignisbasierten Bildsensor.

Bislang wurden jedoch ereignisbasierte Kameras noch in keinen Zusammenhang mit der Sicherheitstechnik gebracht. Dementsprechend gibt es auch keine Konzepte für die Funktionsüberprüfung eines ereignisbasierten Bildsensors. Grundsätzlich basieren ereignisbasierte Bildsensoren auf vergleichbarer Hardware, sind beispielsweise CMOS-Sensoren. Es können deshalb einzelne Pixel nicht mehr funktionsfähig sein und Ausgabesignale liefern, die gänzlich unabhängig von der Szenerie und daher für eine Sicherheitsüberwachung unbrauchbar. Es ist auch denkbar, dass ein Cluster von Pixeln oder der ganze Bildsensor ausfällt. Die bekannten Funktionsüberwachungen für herkömmliche Bildsensoren sind aber nicht in der Lage, dies ausreichend verlässlich zu bemerken.

Die noch unveröffentlichte deutsche Patentanmeldung mit dem Aktenzeichen 102019127826.0 beschreibt einen sicheren optoelektronischen Sensor mit einem ereignisbasierten Bildsensor zur Absicherung einer Mensch-Roboter-Kooperation. Es wird dort aber nicht darauf eingegangen, wie dabei eine Fehleraufdeckung für den Bildsensor realisiert werden könnte.

Es ist daher Aufgabe der Erfindung, die sichere optische Überwachung einer Maschine zu verbessern.

Diese Aufgabe wird durch einen sicheren optoelektronischen Sensor und ein Verfahren zum Absichern einer Maschine nach Anspruch 1 beziehungsweise 15 gelöst. Der Sensor ist sicher, also für eine sicherheitstechnische Anwendung ausgelegt, und erfüllt dafür die notwendigen der einleitend genannten oder entsprechenden Normen oder Anforderungen für Maschinensicherheit beziehungsweise berührungslos wirkende Schutzeinrichtungen, um eine gefahrbringende Maschine abzusichern. Es handelt sich insbesondere um eine Kamera. Die abzusichernde Maschine ist fest montiert, wie ein Roboter oder eine industrielle Bearbeitungsmaschine, oder alternativ mobil wie ein AGV (Automated Guided Vehicle), ein AMR (Autonomous Mobile Robot) oder dergleichen, und sie stellt eine Unfallgefahr vor allem für das Bedienpersonal dar.

Der Sensor weist mindestens einen Bildsensor mit einer Vielzahl von Pixelelementen auf, um Bilddaten von Objekten in einer Umgebung der Maschine zu erfassen. Diese Bilddaten werden in einer Steuer- und Auswertungseinheit zur Beurteilung der Gefährdungssituation verarbeitet. Dabei werden insbesondere Objekte erfasst, um deren Position und möglicherweise weitere für die Gefahrenlage relevante Parameter wie die Geschwindigkeit zu bestimmen. Die Steuer- und Auswertungseinheit kann zumindest teilweise extern außerhalb des eigentlichen Sensors implementiert sein, beispielsweise in einer an den Sensor angeschlossenen Sicherheitssteuerung und/oder in einer Maschinensteuerung, und wird hier funktional dennoch dem Sensor zugerechnet.

Die Steuer- und Auswertungseinheit führt außerdem einen Funktionstest oder Selbsttest des Bildsensors durch, mit dem dessen Einsatzfähigkeit garantiert werden kann beziehungsweise Fehler aufgedeckt werden, die das verhindern. Dabei werden gezielt optische Stimuli erzeugt, auf die ein intakter Bildsensor in einer erwarteten Weise reagiert, so dass Fehler anhand von Abweichungen erkannt werden. Die Erwartungshaltung wird vorzugsweise in einem Einlernverfahren bestimmt, kann aber auch eine Spezifikation des Bildsensors sein. Der Funktionstest betrifft alle relevanten Fehler, wie den Ausfall oder falsche Ausgangssignale einzelner Pixel, ganzer Pixelbereiche, einen Komplettausfall des Bildsensors und sonstige Fehler wie Adressierungsfehler.

Die Erfindung geht von dem Grundgedanken einer ereignisbasierten Absicherung aus. Der Bildsensor ist dafür ein ereignisbasierter oder neuromorphologischer Bildsensor anstelle eines herkömmlichen Bildsensors. Die Unterschiede wurden einleitend kurz diskutiert: Die Pixel erkennen jeweils Veränderungen in der Intensität, statt einfach die jeweilige Intensität zu messen. Eine solche Veränderung, die vorzugsweise rasch genug sein und ein Rauschmaß übersteigen sollte, ist eines der namensgebenden Ereignisse. Zudem werden Signale nur bei einer solchen Veränderung in der Intensität bereitgestellt beziehungsweise ausgelesen werden, und zwar nur von dem betroffenen Pixel oder den betroffenen Pixeln. Der Sensor wird damit ein ereignisbasierter Sicherheitssensor.

Durch den Funktionstest erfüllt der nicht für die Sicherheitstechnik entwickelte ereignisbasierte Bildsensor die Anforderungen entsprechend den einleitend genannten Normen. Die Sicherheit wird vorzugsweise durch einkanalige Architektur mit Funktionstest erreicht. Eine zweikanalige Architektur ist in der Regel zu aufwändig, bleibt aber zunächst denkbar. Auch ein zweikanaliger ereignisbasierter Bildsensor bedarf eines Funktionstests, nämlich des Vergleichs der beiden Kanäle.

Die Erfindung hat den Vorteil, dass der ereignisbasierte Sensor mittels dezidierter Diagnosefunktionen als sicherer Sensor ausgelegt werden kann. Die Diagnosefunktionen beziehungsweise Funktionstests sind für das spezielle Wirkprinzip von ereignisbasierten Kameras ausgelegt. Damit wird eine ereignisbasierte Absicherung möglich, insbesondere ein ereignisbasiertes Speed-and-Separation Monitoring. Eine eigentliche Framerate gibt es dabei nicht mehr. Die effektive Wiederholrate der Erfassung durch die auf Ereignisse reagierenden Pixel ist extrem hoch. Diese geringen Latenzen ermöglichen eine Erfassung und Reaktion praktisch in Echtzeit. Es werden nur solche Bereiche ausgelesen und damit beachtet, in denen es eine Intensitätsveränderung gibt. Redundante Daten wie ein statischer Hintergrund werden erst gar nicht aufgenommen. Eine Hintergrundsegmentierung und Erkennung von Objekten, nämlich den für eine Absicherung gefährlichen bewegten Objekten, leistet bereits der ereignisbasierte Bildsensor durch sein Arbeitsprinzip. Die Bildauswertung wird wesentlich vereinfacht und zugleich robuster und damit der Sensor technologisch einfacher zu realisieren und verbessert trotzdem die Überwachung besonders im Falle hochdynamischer, enger Kollaborationsszenarien. Dabei wird der Prozessablauf effizienter, der Bedarf an Rechenleistung und auch Energieaufnahme verringert sich.

Ein ereignisbasierter Bildsensor ermöglicht zusätzlich zu der sehr schnellen Pixelauslöserate auch einen hohen Dynamikbereich. Der ereignisbasierte Bildsensor ist gegenüber dem Gleichlichtanteil des Hintergrundes nahezu unempfindlich, da dies keine Intensitätsänderung verursacht und deshalb kein Ereignis auslöst. Die meisten Fremdlichtszenarien werden dadurch abgedeckt, denn Szenenänderungen sind entweder sehr träge, weil das Licht permanent an ist, oder ganz kurzfristig, wenn beispielsweise Licht eingeschaltet wird. Ein solches kurzes Ereignis verschwindet schnell in den Bilddaten. Eine modulierte Lichtquelle, wie beispielsweise eine mit 50 Hz modulierte Halogenlampe, kann von der Steuer- und Auswertungseinheit unterdrückt werden. Alle diese Fälle zeigen eine deutlich andere Signatur als die Bewegung von Menschen oder Maschinen.

Als zusätzlicher Vorteil kann angesehen werden, dass sich typischerweise aus den Bilddaten eines ereignisbasierten Bildsensors eine Person zwar als Person erkennen, nicht aber identifizieren lässt. Für die Absicherung, die jede Person schützen soll, ist das völlig ausreichend. Im Gegensatz zu herkömmlichen Bildern ist es nicht mehr erforderlich, erkannte Personen aus Datenschutzgründen zu anonymisieren, weil auch das bereits automatisiert durch das Prinzip des ereignisbasierten Bildsensors geschieht.

Der Sensor weist bevorzugt einen sicheren Ausgang zur Ausgabe eines Absicherungssignals an die überwachte beziehungsweise abzusichernde Maschine auf, wobei die Steuer- und Auswertungseinheit dafür ausgebildet ist, ein Absicherungssignal auszugeben, wenn in den Billdaten ein Objekt erfasst wird, das sich in einer gefährlichen Situation befindet, oder wenn der Funktionstest scheitert. Für ein Objekt wird beispielsweise eine Gefahr erkannt, wenn es sich in einem Schutzfeld oder in zu geringern Abstand zu der Maschine oder deren Arbeitsbereich befindet, wobei zusätzliche Parameter wie die Geschwindigkeit Berücksichtigung finden können (Speed-and-Separation Monitoring). In diesem Fall wird durch Ausgabe eines Absicherungssignals an dem sicheren Ausgang (OSSD, Output Signal Switching Device) eine sicherheitsgerichtete Reaktion eingeleitet, um eine erkannte Gefahr auszuräumen. Je nach Situation kann diese Gegenmaßnahme in einer Verlangsamung der Bewegung, einem Ausweichen oder einem Anhalten bestehen. Das Absicherungssignal wird ebenfalls ausgegeben, wenn der Funktionstest einen defekten Bildsensor anzeigt. Dazu reichen jedoch einzelne defekte Pixelelemente nicht zwingend aus, vielmehr ist das in der Sicherheitsbetrachtung für den Sensor beziehungsweise dessen Absicherungsanwendung sicherheitstechnisch zu betrachten. Ein Pixelelement könnte zu klein sein, um überhaupt ein relevantes Objekt zu verdecken, oder der Sichtbereich des defekten Pixelelements ist gar nicht sicherheitsrelevant, beispielsweise fern der Maschine beziehungsweise außerhalb von Schutzfeldern.

Ein jeweiliges Pixelelement stellt bevorzugt fest, wenn sich die von dem Pixelelement erfasste Intensität ändert, und liefert genau dann ereignisbasiert eine Bildinformation. Das besondere Verhalten der Pixelelemente einer ereignisbasierten Kamera wurde bereits mehrfach angesprochen. Das Pixelelement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst.

Das Pixelelement liefert vorzugsweise als Bildinformation eine differentielle Information, ob sich die Intensität verringert oder erhöht hat. Die aus dem Pixelelement gelesene Information ist also beispielsweise ein Vorzeichen +1 oder -1 je nach Änderungsrichtung der Intensität. Dabei kann eine Schwelle für Intensitätsänderungen gesetzt sein, bis zu denen das Pixelelement noch kein Ereignis auslöst. In einer nachgelagerten internen Repräsentation zur weiteren Auswertung kann für Zeiten, zu denen kein Ereignis erfasst wurde, der Wert 0 ergänzt werden.

Das Pixelelement liefert bevorzugt als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Das jeweilige Pixelelement gibt Bildinformationen bevorzugt mit einer Aktualisierungsfrequenz von mindestens einem KHz oder sogar mindestens zehn KHz, hundert KHz oder 1 MHz ausgibt. Das entspricht Latenzzeiten von nur 1 ms bis sogar nur 1 µs. Die Aktualisierungsfrequenz einer herkömmlichen Kamera ist die Bildwiederholfrequenz oder Framerate. Eine solche gemeinsame Bildwiederholfrequenz kennt die ereignisbasierte Kamera nicht, da die Pixelelemente ihre Bildinformationen einzeln und ereignisbasiert ausgeben oder auffrischen. Dabei gibt es aber extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen Aktualisierungsfrequenz wäre das mit herkömmlichen Kameras technisch nicht mehr darstellbar. Diese hohe zeitliche Auflösung hat auch den Vorteil, dass es praktisch keine Bewegungsartefakte (motion blurr) gibt. Innerhalb einer der extrem kurzen Aktualisierungsperioden, die einer herkömmlichen Belichtungszeit entspricht, bewegt sich ein Objekt nicht mehrere Pixel weiter, und deshalb wird auch kein verschmiertes Bild aufgenommen.

Der Bildsensor erzeugt bevorzugt als Bildinformation einen Datenstrom aus Ereignissen, die jeweils Koordinateninformationen des zugehörigen Pixelelements, eine Zeitinformation und eine Intensitätsinformation aufweisen. Ein herkömmlicher Datenstrom besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen vorzugsweise Datentupel je Ereignis ausgegeben, die das Ereignis zuordenbar machen. Dabei wird der Ort des zugehörigen Pixelelements, die Richtung ±1 der Intensitätsänderung und/oder die zum Ereignis gemessene Intensität sowie ein Zeitstempel festgehalten.

Vorzugsweise wird der Datenstrom durch Auffüllen mit Nullen in eine Matrix gewandelt, deren Basis durch die Anordnung der Pixelelemente auf dem Bildsensor und die Zeit gebildet ist. Durch die Ereignisse wird letztlich eine dünn besetzte Matrix (sparse matrix) erzeugt, der Datenstrom von dem ereignisbasierten Bildsensor entspricht einer speicher- und bandbreitensparenden Repräsentation davon. Für die weitere Verarbeitung kann eine gewohnte Matrixdarstellung geeigneter sein, die aus einer Sequenz zeitlich aufeinander folgender Einzelbilder besteht, d.h. aus in der Zeit aneinandergereihten Schichten der jeweils zu einem festen Zeitpunkt aufgenommenen Intensitätsverteilung über die Pixelelemente des Bildsensors. Die Granulierung der Zeitrichtung würde herkömmlich durch die Framerate vorgegeben, bei einer ereignisbasierten Kamera kann durch Zusammenfassung von Ereignissen aus bestimmten Zeitintervallen ebenfalls der Framerate entsprechen oder wahlweise sehr viel feiner oder auch gröber festgelegt werden.

Der Sensor weist eine Testbeleuchtungseinrichtung zum Erzeugen einer Intensitätsänderung oder eines Intensitätssprungs des auf den Bildsensor fallenden Empfangslichts auf. Der Stimulus ist dementsprechend Testlicht. Prinzipiell ist jegliche Intensitätsänderung durch Testlicht denkbar. Besonders bevorzugt ist eine Veränderung von dunkel nach hell und/oder umgekehrt, beispielsweise in Form einer linearen Rampe oder als Sprung beziehungsweise mehrere Sprünge, wie bei einem Blitzlicht. Die Testbeleuchtung kann intern oder extern vorgesehen sein. Das Testlicht trifft gezielt bestimmte Pixelelemente, die möglicherweise auch durch Ausrichten der Testbeleuchtungseinrichtung veränderbar sind, oder sämtliche Pixelelemente.

In der Steuer- und Auswertungseinheit ist gemäß einer Alternative eine Erwartungshaltung gespeichert, nach welcher Zeit ab einer Intensitätsänderung wie viele Pixelelemente ein Ereignis bei funktionsfähigem Bildsensor registriert haben, insbesondere eine Zeit bis zu einem bestimmten Quantil. Die Erwartungshaltung ist hier die Funktion der Anzahl reagierender Pixelelemente in Abhängigkeit von der Zeit ab einem Stimulus. Dabei ist klar, dass sämtliche Erwartungen und ebenso Messungen während eines Funktionstests einer gewissen statistischen Schwankung unterliegen, der durch Mehrfachbestimmung, Mittelung und dergleichen Rechnung getragen werden kann. Diese Funktion kann also solche vollständig gespeichert sein, oder sie wird beispielsweise stufenförmig angenähert. Besonders bevorzugt ist lediglich ein Wert gespeichert, nämlich die Zeit, bis ein bestimmtes Quantil der Pixelelemente ein Ereignis registriert hat, beispielsweise die Hälfte oder ein sonstiger Prozentsatz.

In der Steuer- und Auswertungseinheit ist gemäß einer weiteren Alternative eine Erwartungshaltung gespeichert, nach welcher Zeit ab einer Intensitätsänderung ein bestimmtes Pixelelement im intakten Zustand ein Ereignis registriert. Hier werden die Reaktionszeiten der Pixelelemente auf einen Stimulus nicht mehr gemeinsam, sondern individuell betrachtet. Jedes Pixelelement wird aufgrund individueller Eigenschaften mit unterschiedlicher Verzögerung reagieren. Diese Verzögerungen können für einzelne, mehrere oder sogar alle Pixelelemente vorab bestimmt und dann im Betrieb getestet werden. Bei einem herkömmlichen Bildsensor zeigen die Pixelelement ein individuelles Rauschverhalten, das praktisch ein Fingerabdruck des Bildsensors ist (FPN, Fixed Pattern Noise, beziehungsweise PRNU, Photo Response Non-Uniformity). Der hier angesprochene Funktionstest basiert auf einem Analogon für ereignisbasierte Bildsensoren, einer Art temporaler PRNU der individuellen Verzögerungen, mit denen Pixelelemente Ereignisse registrieren.

Die Steuer- und Auswertungseinheit ist bevorzugt dafür ausgebildet, bei dem Funktionstest zu messen, wann ein bestimmtes Pixelelement ab einer Intensitätsänderung ein Ereignis registriert und/oder die Pixelelemente zu zählen, die zum jeweiligen Zeitpunkt ein Ereignis registrieren. Eine Erwartungshaltung, wie lange Pixelelemente benötigen, bis sie auf einen Stimulus reagieren, lässt sich mehreren verschiedenen Funktionstests zugrunde legen. Dabei wird mit einer der zuvor vorgestellten Erwartungshaltungen verglichen, wobei jeweils eine gewisse Toleranz noch nicht als Fehler angesehen wird. In einer Ausführungsform werden die reagierenden Pixelelemente gezählt, und es wird die Dauer bestimmt, bis ein bestimmtes Quantil wie die Hälfte der Pixelelemente reagiert hat. Diese Dauer sollte der bei funktionsfähigem Bildsensor bestimmten Dauer entsprechen. In einer anderen Ausführungsform wird eine Art zeitliches Histogramm gebildet, wann die Pixelelemente reagiert haben, und dies wird mit der Funktion der Anzahl reagierender Pixelelemente in Abhängigkeit von der Zeit des intakten Bildsensors verglichen. Bei diesen Funktionstests werden die Pixelelemente global betrachtet, da nicht unterschieden wird, ob ein bestimmtes Pixelelement n früh oder spät reagiert hat, sondern nur, ob irgendwelche Pixelelemente mit dem erwarteten Zeitverhalten reagieren. In weiteren Ausführungsformen werden Pixelelemente einzeln betrachtet. Das kann trotzdem ein Vergleich mit einer globalen Erwartungshaltung sein, etwa ob ein Pixelelemente deutlich zu träge reagiert. Nochmals alternativ werden einzelne Pixelelemente mit der dafür individuell bestimmten Erwartungshaltung verglichen, d.h. es wird die temporale PRNU geprüft.

In der Steuer- und Auswertungseinheit ist gemäß einer weiteren Alternative eine Erwartungshaltung gespeichert, bei welcher Intensitätsdifferenz wie viele Pixelelemente ein Ereignis bei funktionsfähigem Bildsensor registriert haben und/oder bei welcher Intensitätsdifferenz ein bestimmtes Pixelelement im intakten Zustand ein Ereignis registriert. In diesen Ausführungsformen wird statt einer Zeitbetrachtung eine Kontrastbetrachtung vorgenommen.

Es wird nicht geprüft, wie lange es dauert, bis ein Pixelelement auf eine Intensitätsänderung reagiert, sondern wie stark diese Intensitätsänderung sein muss, damit es reagiert. Eine Intensitätsdifferenz bezeichnet damit die Stärke oder das Ausmaß einer Intensitätsänderung, beispielsweise die Differenz zwischen Maximum und Minimum der Intensität während eines Stimulus'. Beide Arten von Funktionstest sind aber auch miteinander kombinierbar.

Um hierfür eine Erwartungshaltung abzuleiten, werden dem Bildsensor unterschiedliche Intensitätsänderungen präsentiert, also Iₙ -> Iₘ, m,n=1, 2, 3..., vorzugsweise als einfacher Intensitätssprung, wobei die jeweilige Ausgangs- oder Zielintensität festgehalten bleiben oder ebenfalls variiert werden kann. Die resultierende Erwartungshaltung kann bei der Kontrastbetrachtung ähnlich wie bei der zuvor erläuterten Zeitbetrachtung global als vollständige Funktion der Anzahl reagierende Pixelelemente in Abhängigkeit der jeweiligen Intensitätsdifferenz oder als ein Grenzkontrast bestimmt werden, bei dem ein bestimmtes Quantil wie die Hälfte aller Pixelelemente reagiert. Ebenfalls möglich ist eine individuelle Bestimmung des notwendigen Kontrastes, auf den ein bestimmtes Pixelelement reagiert. Das ergibt dann eine Art kontrastbasierte PRNU für eines, mehrere oder alle Pixelelemente.

Die Steuer- und Auswertungseinheit ist bevorzugt dafür ausgebildet, bei dem Funktionstest zu messen, ob ein bestimmtes Pixelelement auf eine bestimmte Intensitätsdifferenz hin ein Ereignis registriert und/oder die Pixelelemente zu zählen, die auf eine bestimmte Intensitätsdifferenz hin ein Ereignis registrieren. Die Funktionstests für den kontrastbasierten Ansatz sind analog zu denjenigen für den zeitbasierten Ansatz. Für einige Funktionstests genügt es, eine einzige Intensitätsdifferenz als Stimulus zu verwenden. Dann wird geprüft, ob darauf eine erwartete Anzahl Pixelelemente reagiert, wie die Hälfte aller Pixelelemente. Es kann bei dem kontrastbasierten Ansatz sinnvoll sein, die Intensitätsdifferenz zu variieren, wobei dies auch über eine längere Dauer verschiedener Funktionstests geschehen kann. Denn bei einer bestimmten Intensitätsdifferenz ist nicht klar, ob ein Pixelelement deshalb nicht reagiert, weil es für diesen Kontrast noch nie empfindlich genug war oder ob es tatsächlich defekt ist. Sollen individuelle Pixelelemente gegen eine eigene Erwartungshaltung getestet werden, so ist dafür vorzugsweise ebenfalls die passende Intensitätsdifferenz zu verwenden.

Die Steuer- und Auswertungseinheit ist bevorzugt dafür ausgebildet, bei einer kontinuierlichen Intensitätsänderung zu zählen, wie oft ein Pixelelement ein Ereignis auslöst, und dies mit einer bei der gleichen Intensitätsänderung zuvor bestimmten Anzahl zu vergleichen, insbesondere bei einer kontinuierlichen Intensitätsänderung oder Rampe von dunkel nach hell und zurück. Die bisher erläuterten Funktionstests können mit einem einfachen Intensitätssprung durchgeführt werden, ohne dafür einen komplizierteren Intensitätsverlauf auszuschließen. Wird nun gezielt eine kontinuierliche Intensitätsänderung als Stimulus verwendet, die der Einfachheit halber vorzugsweise linear verläuft, so werden dadurch mehrere Ereignisse in einem Pixelelement ausgelöst. Diese können gezählt oder eine Statistik der jeweiligen Dauer zwischen Ereignissen erhoben werden und damit ähnliche Funktionstests vorgenommen werden wie oben beschrieben. Die kontinuierliche Intensitätsänderung kann in beiden Richtungen von dunkel nach hell und/oder umgekehrt verlaufen.

Dem Bildsensor ist bevorzugt ein Verschluss vorgeordnet, wobei in der Steuer- und Auswertungseinheit eine Erwartungshaltung gespeichert ist, wie viele oder welche Pixelelemente und insbesondere in welcher zeitlichen Abfolge bei Betätigen des Verschlusses ein Ereignis registrieren, wobei während des Funktionstests der Verschluss betätigt wird und die dadurch in den Pixelelementen ausgelösten Ereignisse mit der Erwartungshaltung verglichen werden. Hier wird der Stimulus nicht durch eine aktive Testbeleuchtung, sondern durch Abschirmen beziehungsweise erneutes Durchlassen des Empfangslichts erzeugt. Dadurch wird der Aufbau vereinfacht. Außerdem erzeugt die Bewegung des Verschlusses eine bestimmte zeitliche Abfolge, mit der Ereignisse in den Pixelelementen ausgelöst werden sollten, die zusätzliche Möglichkeiten für den Funktionstest bieten.

Die Steuer- und Auswertungseinheit ist bevorzugt dafür ausgebildet, als Stimulus den Bildsensor zu bewegen oder ein vorgeordnetes optisches Element zu verändern. Das sind weitere Möglichkeiten, um das aufgenommene Bild künstlich zu verändern. Bei dem vorgeordneten optischen Element handelt es sich beispielsweise um einen bewegten Spiegel oder eine Empfangsoptik, die bewegt oder anders fokussiert wird.

Die Steuer- und Auswertungseinheit ist bevorzugt dafür ausgebildet, Rauschcharakteristika von Pixelelementen zu prüfen, insbesondere von abgedunkelten Pixelelementen mit auf den Rauschpegel herabgesetzter Ereignisschwelle. Die Rauschverteilung lässt sich bevorzugt in ausreichender Näherung durch das erste Moment der Ereignisfrequenz beschreiben. Die Häufigkeit der Ereignisse eines defekten Pixelelements wird in der Regel auffällig sein, weil es gar nicht mehr reagiert oder fortlaufend unabhängig von der Szenerie Ereignisse erzeugt. Das ist ein Pendant zu permanent dunklen oder hellen Pixeln herkömmlicher Bildsensoren ("Stuck-at-Fehlern"). Um das Rauschverhalten unabhängig von der Szenerie zu beurteilen, können Pixelelemente abgedunkelt werden. Da sie dann für gewöhnlich gar keine Ereignisse mehr sehen, wird die Ereignisschwelle abgesenkt, so dass auch die Dunkelfluktuationen für ein Auslösen von Ereignissen ausreicht. Das wird vorzugsweise eine gewisse Anzahl Pixelelemente betreffen, um keinem Trugschluss vom Verhalten eines einzelnen Pixelelements zu ziehen. Ändert sich das Rauschverhalten abgedunkelter Pixelelemente signifikant, so ist die Annahme berechtigt, dass der Bildsensor insgesamt nicht mehr ordnungsgemäß funktioniert.

Die Steuer- und Auswertungseinheit ist bevorzugt dafür ausgebildet, die zeitliche Abfolge der ein Ereignis detektierenden Pixelelemente zu prüfen. Bei intaktem Bildsensor sollten die Zeitstempel der in den Pixelelementen registrierten Ereignisse chronologisch geordnet eintreffen, wobei noch minimale Verschiebungen durch Signallaufzeiten denkbar sind. Wird diese Chronologie nicht eingehalten, so deutet dies auf eine Fehlfunktion des Bildsensors hin.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Kamera und ihres Überwachungsbereichs;
- Fig. 2: eine beispielhafte Intensitätsverteilung eines Pixels zur Erläuterung von ereignisbasierter Erfassung von Bildinformation;
- Fig. 3: eine Darstellung eines beispielhaften Intensitätssprungs als Stimulus für einen Bildsensortest sowie den zeitlichen Verlauf der Anzahl darauf reagierender Pixelelemente;
- Fig. 4: eine Darstellung gemäß Figur 3 mit drei beispielhaft hervorgehobenen Zeitpunkten der Reaktion einzelner Pixel;
- Fig. 5: eine Darstellung ähnlich Figur 3, nun jedoch der Anzahl Pixel, die auf eine bestimmte Kontraständerung, also Höhe des Intensitätssprungs reagieren, wobei dementsprechend statt der Zeit die Kontraständerung auf der X-Achse aufgetragen ist; und
- Fig. 6: eine Darstellung einer steigenden und fallenden Intensitätsrampe mit beispielhaften dadurch ausgelösten Ereignissen in einem Pixelelement.

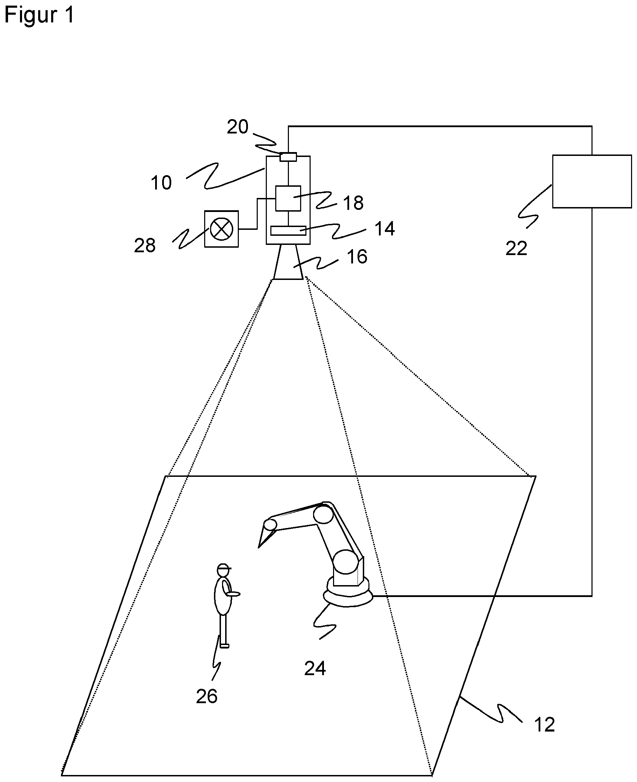

Figur 1 zeigt in einer schematischen dreidimensionalen Darstellung eine Kamera 10 als Beispiel eines optoelektronischen Sensors in einer rein beispielhaften Anordnung in Vogelperspektive zur Erfassung eines Überwachungsbereichs 12. Der gesamte erfassbare Überwachungsbereich 12 oder auch Arbeitsbereich kann über eine Konfiguration auf sicherheitsrelevante Teilbereiche eingeschränkt werden. Die Kamera 10 ist vorzugsweise fehlersicher im Sinne von Sicherheitsnormen wie den einleitend genannten ausgelegt. Sie weist einen Bildsensor 14 mit einer Vielzahl von insbesondere zu einer Matrix angeordneten Pixelelementen auf, der erfindungsgemäß ein ereignisbasierter Bildsensor 14 ist, worauf später noch im Detail eingegangen wird. Dem Bildsensor 14 ist ein Objektiv 16 vorgeordnet, das in der Praxis als jedes bekannte Abbildungsobjektiv realisiert sein kann.

Mit dem Bildsensor 14 ist eine Steuer- und Auswertungseinheit 18 verbunden. Die Steuer- und Auswertungseinheit 18 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon. Zumindest Teile der Funktionalität der Steuer- und Auswertungseinheit 18 können extern implementiert sein, beispielsweise in einer über einen sicheren Ausgang 20 angeschlossenen Sicherheitssteuerung 22 oder einer Robotersteuerung eines über die Sicherheitssteuerung 22 oder alternativ abweichend von Figur 1 direkt angeschlossenen Roboters 24. Der Roboter 24 steht stellvertretend für eine Maschine, von der eine Gefahr für Personen 26 in deren Umgebung ausgeht.

Die Steuer- und Auswertungseinheit 18 ist mit dem Bildsensor 14 verbunden und wertet dessen Bilddaten aus. Ziel dieser Auswertung ist die Überwachung des Roboters 24, um Unfälle mit Personen 26 und auch anderen Objekten in dessen Umgebung zu verhindern. Dazu werden je nach Sicherheitskonzept Positionen des Roboters 24 beziehungsweise seiner bewegten Teile, Positionen von Personen 26 in dessen Umgebung und Zusatzgrößen wie Abstände, Geschwindigkeiten und weitere kinematische oder sonstige Größen bestimmt. Beispielsweise werden bei einem Schutzfeldkonzept Positionen der Person 26 mit den konfigurierten Schutzfeldgrenzen verglichen. Für ein Speed-and-Separation-Monitoring wird der Abstand zwischen Roboter 24 und Person 26 sowie die Relativgeschwindigkeit dazwischen bestimmt. Im Gefährdungsfall wird über den sicheren Ausgang 20 eine sicherheitsgerichtete Reaktion eingeleitet. Das ist nur im äußersten Fall ein Nothalt und vorzugsweise ein Ausweichen oder Verlangsamen. Dank des ereignisbasierten Bildsensors 14 ist eine extrem schnelle Reaktion mit feiner Anpassung von Arbeitsgeschwindigkeit und eventuell auch Bewegungsbahn des Roboters 24 möglich, so dass dessen Produktivität so wenig wie möglich eingeschränkt wird.

Als Teil der sicheren Auslegung der Kamera 10 ist die Steuer- und Auswertungseinheit 18 in der Lage, den ereignisbasierten Bildsensor 14 zyklisch oder auf Anforderung auf dessen Funktionsfähigkeit zu testen. Dazu können dem Bildsensor 14 Stimuli präsentiert werden, auf die ein intakter Bildsensor 14 in einer erwarteten Weise reagieren sollte. In der in Figur 1 dargestellten Ausführungsform ist zum Erzeugen dieser Stimuli eine Testlichtquelle 28 vorgesehen, die wie gezeigt extern oder alternativ intern in einem Gehäuse der Kamera 10 angeordnet sein kann. Alternative Stimuli sowie mögliche Ausgestaltungen des Funktionstests werden weiter unten erläutert.

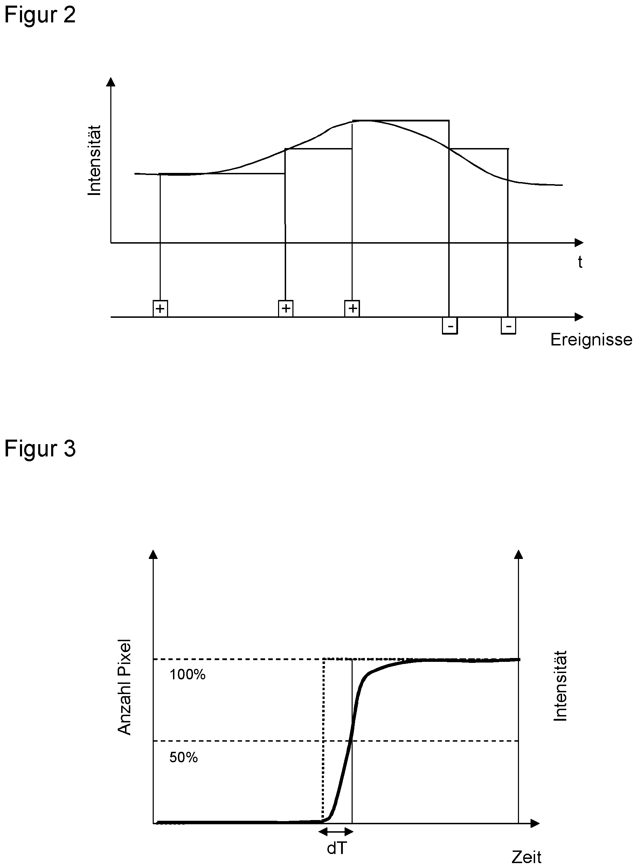

Figur 2 zeigt zur Erläuterung des Funktionsprinzips des ereignisbasierten Bildsensors 14 im oberen Teil einen rein beispielhaften zeitlichen Intensitätsverlauf in einem Pixelelement des Bildsensors 14. Ein herkömmlicher Bildsensor würde diesen Intensitätsverlauf über ein vorgegebenes Belichtungszeitfenster integrieren, und die integrierten Werte aller Pixelelemente würden im Takt einer vorgegebenen Framerate ausgegeben und dann für das nächste Bild zurückgesetzt.

Ein Pixelelement des ereignisbasierten Bildsensors 14 reagiert stattdessen individuell und unabhängig von einer Framerate auf eine Intensitätsänderung. Mit senkrechten Strichen sind jeweils Zeitpunkte markiert, zu denen eine Intensitätsänderung festgestellt wurde. Im unteren Teil der Figur 2 sind zu diesen Zeitpunkten Ereignisse mit Plus und Minus je nach Richtung der Intensitätsänderung dargestellt. Es ist denkbar, dass das Pixelelement nicht auf jegliche Intensitätsänderung reagiert, sondern erst, wenn eine gewisse Schwelle überschritten wird. Das Pixelelement wird ereignisbasiert zu den Zeitpunkten ausgelesen, zu denen eine Intensitätsänderung erkannt wird, und gibt dann das Vorzeichen aus. Die Bildinformationen können anschließend noch um den Wert Null zu den Zeiten ergänzt werden, in denen es kein Ereignis gab, damit ein Bild über alle Pixelelemente des Bildsensors 14 entsteht. Diese Bild zeigt anders als von herkömmlichen Bildern gewohnt nur die bewegten Kanten an, seien es Objektkonturen, Schatten oder Aufdrucke.

Neben solchen differenziellen ereignisbasierten Kameras gibt es auch integrierende ereignisbasierte Kameras. Sie reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Zur Technologie einer ereignisbasierten Kamera wird ergänzend auf die einleitend genannte Patentliteratur und wissenschaftliche Literatur verwiesen.

Durch die ereignisbasierte Erfassung von Bildinformationen entsteht ein dünn besetzter (sparse) dreidimensionaler Datensatz, da für eine feste Zeit anders als bei einer herkömmlichen Kamera nicht jedes Pixelelement eine Bildinformation liefert, sondern nur diejenigen, die ein Ereignis in Form einer Intensitätsänderung registrieren. Ein Ereignis wird beispielsweise als Tupel mit dem Vorzeichen der Intensitätsänderung bei differentieller ereignisbasierter Kamera beziehungsweise einem Grauwert bei integrierende ereignisbasierter Kamera, der Pixelposition auf dem Bildsensor 14 in X- und Y-Richtung und einem Zeitstempel ausgegeben. Solche Ereignisse können nachgelagert durch Auffüllen mit Nullen wieder zu einer üblichen Matrix ergänzt werden. Zwei Dimensionen entsprechen dann der Pixelanordnung auf dem Bildsensor 14. Wird auch die Zeit berücksichtigt, so entsteht eine dreidimensionale Matrix, deren Schichten jeweils zweidimensionale Bewegungsbilder sind und deren dritte Dimension die Zeit vorzugsweise mit extrem hoher Zeitauflösung im Bereich höchstens weniger Mikrosekunden oder noch darunter ist. Das entspricht einem Film mit durch die Schichten gebildeten Frames, jedoch mit ungewöhnlich hoher Framerate.

Im Folgenden werden nun eine Reihe von Diagnoseverfahren vorgestellt, die sich für einen Funktionstest spezifisch für einen ereignisbasierten Bildsensor 14 eignen. Sie können einzeln oder in Kombination verwendet werden, um den sogenannten Diagnosedeckungsgrad (DC, Diagnostic Coverage) eines ereignisbasierten Sicherheitssensors zu erhöhen. Solche Kombinationen sind besonders für die Erreichung von hohen Diagnosedeckungsgraden vorteilhaft, wie > 99,9% gemäß ISO 61508.

Dabei wird jeweils eine wohldefinierte Veränderung induziert, bei der die zu testenden Pixelelemente, vorzugsweise sämtliche Pixelelemente oder ein Großteil der Pixelelemente, auf diesen Stimulus hin eine Änderung erfahren. Die Reaktion der Pixelelemente auf diese Änderung wird mit einer Erwartungshaltung verglichen. Treten Anomalien auf, so kann eine sicherheitsgerichtete Maßnahme eingeleitet werden. Nicht jeder angenommene Pixelfehler ist automatisch schon sicherheitskritisch, es können noch Kriterien hinzutreten, wie die Dauer oder Reproduziertbarkeit der Fehlfunktion, die Anzahl der betroffenen Pixel, ob diese örtlich gehäuft auftreten oder ob sie einen sicherheitsrelevanten Teil des Überwachungsbereichs 12 beobachten und dergleichen.

Ein ereignisbasierter Bildsensor 14 reagiert auf Veränderungen der Helligkeit oder Intensität. Bei lokaler oder globaler Variation der Intensität ändert sich der Zustand einzelner oder zahlreicher Pixelelemente. Eine Möglichkeit, solche Intensitätsänderungen zu induzieren, ist der Einsatz der Testlichtquelle 28, die beispielsweise als Blitzlicht fungiert. Ist die Testlichtquelle 28 intern in der Kamera 10 angeordnet, so fällt gezielt Testlicht auf den Bildsensor 14, bei externer Anordnung der Testlichtquelle 28 wird das in der Szene des Überwachungsbereichs 12 reflektierte oder remittierte Streulicht eingefangen. Eine interne Testlichtquelle 28 führt zu besser reproduzierbaren Bedingungen und ist daher der robustere Fall. Dafür lässt sich ein Funktionstest mit externer Testlichtquelle 28 möglicherweise besser mit einer gleichzeitigen Überwachung vereinbaren. In beiden Fällen sollten die von dem Stimulus beleuchteten Pixelelemente in einer erwarteten Weise reagieren. Dazu werden nun diverse Möglichkeiten beschrieben. Im Gegensatz zu einem herkömmlichen Testverfahren muss das Pixelelement jeweils nicht saturiert werden. Es ist denkbar, einen zusätzlichen Lichtempfänger vorzusehen, um durch weitere Funktionstests die Funktionsfähigkeit der Testlichtquelle 28 selbst sicherzustellen.

Figur 3 zeigt die Anzahl der Pixelelemente, die auf einen gepunktet dargestellten Intensitätssprung reagieren, in Abhängigkeit von der Zeit. Der Intensitätssprung führt von dunkel nach hell, die umgekehrte Richtung wäre bei sämtlichen beschriebenen Funktionstests auch denkbar, das wird im Folgenden nicht mehr eigens erwähnt. Ebenso ist ein kontinuierlicher Verlauf, insbesondere eine lineare Rampe, anstelle eines Sprungs denkbar.

Die untere gestrichelte Linie entspricht einem bestimmten Quantil, hier der Hälfte, und die obere gestrichelte Linie der Gesamtzahl getesteter Pixelelemente. Die Kurve lässt sich wahlweise als Erwartungshaltung, die vorab eingelernt oder aus Daten des Bildsensors 14 abgeleitet ist, oder als Messergebnis während des Funktionstests verstehen. Beides sollte innerhalb von geforderten Toleranzen miteinander verträglich sein. Um den Funktionstest zu vereinfachen, wird in einer bevorzugten Ausführungsform nicht die gesamte Kurve aufgezeichnet und verglichen, sondern als Erwartungshaltung und beim Funktionstest jeweils nur eine Zeitdauer dT bestimmt, nach der ein bestimmtes Quantil wie die Hälfte oder eine sonstige Prozentzahl der Pixelelemente ein Ereignis auslösen. Es ist denkbar, mehrere Zeitdauern für unterschiedliche Quantile zu prüfen.

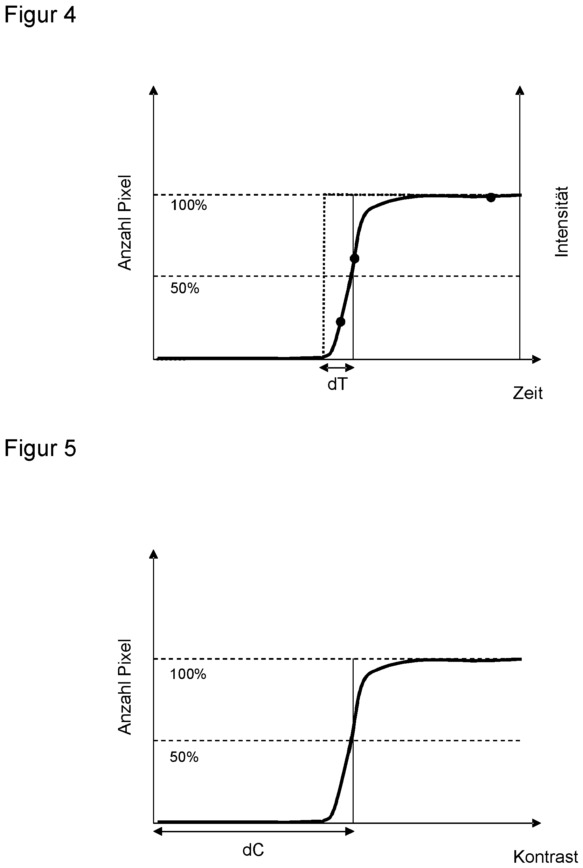

Figur 4 illustriert eine weitere Variante dieses Funktionstests, mit der nicht nur globale Aussagen getroffen, sondern auch einzelne Pixelelemente geprüft werden. Dafür sind beispielhaft die Zeitstempel der Reaktion auf den Intensitätssprung für drei bestimmte Pixelelemente auf der Kurve als Punkte eingezeichnet. Die ersten beiden Pixelelemente reagieren unproblematisch schnell, aber das dritte Pixelelement ist recht träge. Je nach Sicherheitsanforderungen der konkreten Kamera 10 und Anwendung ist nun zu entscheiden, ob diese Trägheit sicherheitsrelevant ist. Es ist auch denkbar, dass Pixelelemente in ihrer Reaktion variieren, beispielsweise auf einen Intensitätssprung sofort, dann träge und dann gar nicht reagieren. Auch dann muss entschieden werden, ob dieses Verhalten sicherheitsrelevant ist. Löst ein Pixelelement gar kein Ereignis aus, so gilt es regelmäßig als defekt. Immer noch ist zu entscheiden, ob der Defekt eines Pixelelements schon für den ganzen Bildsensor 14 sicherheitsrelevant ist.

Der Funktionstest lässt sich noch stärker auf die Ebene einzelner Pixelelemente bringen, indem die Erwartungshaltung nicht als gemeinsame Kurve für alle Pixelelemente, sondern individuell für zu testende Pixelelemente bestimmt wird. Bei einem herkömmlichen Bildsensor zeigt jedes Pixelelement ein individuelles Rauschverhalten (PRNU, Photo Response Non-Uniformity). Die individuelle Bestimmung von Reaktionszeiten eines Pixelelements des ereignisbasierten Bildsensors 14 ist ein Gegenstück dazu und kann als temporale PRNU bezeichnet werden. Diese individuellen Reaktionszeiten von Pixelelementen können als Erwartungshaltung vorgegeben und im Funktionstest geprüft werden. Damit sind insbesondere auch Adressierungsfehler identifizierbar, wie für einen herkömmlichen Bildsensor in der einleitend schon genannten WO 2015/130570 A1 beschrieben.

Um mit Abweichungen im Verhalten der Pixelelemente in Einzelmessungen umzugehen, wird bevorzugt sowohl beim Bestimmen der Erwartungshaltung wie auch beim Funktionstest der gleiche oder ein unterschiedlicher Stimulus mehrfach wiederholt. Dadurch ergibt sich die Möglichkeit statistischer Betrachtungen, wie eine Mittelung der Erwartungshaltung und eine statistische Beurteilung, ob ein unerwartetes Verhalten eines Pixelelements noch im Rahmen liegt oder bereits einen Defekt anzeigt.

Figur 5 illustriert einen weiteren Ansatz für eine Funktionsüberprüfung. Bisher wurde das Zeitverhalten der Pixelelemente betrachtet, nun wird geprüft, ab welchen Kontraststufen ein Pixelelement reagiert. Dann wird nicht mehr gemessen, wie lange es dauert, bis ein Pixelelement auf die Intensitätsänderung hin ein Ereignis auslöst, sondern ob es auf diese Kontraststufe überhaupt reagiert. Im einfachsten Fall wird zum Ableiten der Erwartungshaltung irgendeine Intensitätsänderung induziert, dabei gezählt, wie viele Pixelelemente darauf reagieren, und eine ähnliche Anzahl auch beim Funktionstest erwartet. Für genauere Ergebnisse sind jedoch unterschiedliche Intensitätsdifferenzen oder Intensitätsstufen erforderlich. Es wird also mehrfach mit Intensitätsdifferenzen Iₙ-Iₘ , n, m= 1,2,3... stimuliert, wobei n oder m auch festgehalten werden kann. Bei einer bevorzugten festen Ausgangsintensität I kann der jeweilige Kontrast nach Michelson zu (Iₙ-I)(Iₙ+i) bestimmt werden.

So entsteht die in Figur 5 gezeigte Kurve, die angibt, auf welchen Kontrast wie viele Pixelelemente reagieren. Die damit möglichen Funktionstests sind analog zu denen, die zu Figur 3 und 4 beschrieben wurden. Erneut kann beim Funktionstest die gesamte Kurve ausgemessen werden, wofür dann aber zahlreiche Intensitätsdifferenzen getestet werden müssen. Vereinfachend kann ein Grenzkontrast dC bestimmt werden, auf den ein bestimmtes Quantil der Pixelelemente reagiert, beispielsweise die Hälfte. Der Grenzkontrast dC wird im Übrigen von der jeweiligen Ausgangsintensität abhängen, es ist deshalb ein unterschiedliches Verhalten zu erwarten, je nachdem, bei welcher Intensität ein Intensitätssprung beginnt. Es kann neben solchen globalen Funktionstests auch wieder für einzelne Pixelelemente bestimmt werden, ob sie erst auf ungewöhnlich große Intensitätsunterschiede reagieren. Statt eines Vergleichs mit einer globalen Erwartungshaltung kann auch für jedes zu testende Pixelelement ein individueller Grenzkontrast vorgegeben werden, ab dem dort ein Ereignis ausgelöst wird. Das wäre dann eine kontrastbasierte PRNU ähnlich der oben erläuterten temporalen PRNU.

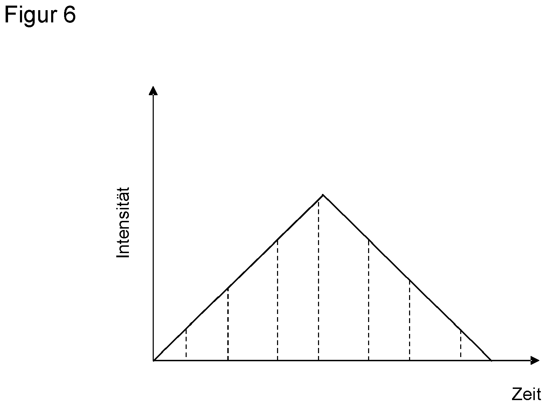

Figur 6 illustriert einen weiteren Funktionstest mit einer steigenden und fallenden Rampe als Stimulus. Dabei löst das hier betrachtete Pixelelement zu den mit gestrichelten Linien gekennzeichneten Zeitpunkten jeweils ein Ereignis aus. Die Ereignisse auf der steigenden Rampe werden auch als On-Events, diejenigen auf der fallenden Rampe als Off-Events bezeichnet. Wie schon erwähnt, können sämtliche vorgestellten Funktionstests sowohl positiven wie negativen Intensitätsänderungen basieren, oder wie in Figur 6 auf einer Kombination aus beidem.

Idealisiert wäre zu erwarten, dass es eine gleiche Anzahl und Verteilung der On-Events und der Off-Events gibt. In der Realität kann es aber auch bei intaktem Pixelelement Abweichungen geben. Jedenfalls sind Anzahl On-Events und Off-Events, deren Verhältnis zueinander oder auch andere Kenngrößen der statistischen Verteilung der Zeitpunkte der Ereignisse eine weitere Möglichkeit, eine Erwartungshaltung zu erzeugen und einen Funktionstest durchzuführen. Die Intensitätsverteilung mit einer linearen Rampe ist wieder nur ein Beispiel, es wurde schon mehrfach erwähnt, dass die Erfindung nicht auf Intensitätssprünge und lineare Intensitätsverläufe beschränkt ist.

In den bisherigen Ausführungsformen wird der Stimulus durch die Testlichtquelle 28 erzeugt. Dazu gibt es mehrere Alternativen. Ein mechanischer Verschluss (Shutter) sorgt ebenfalls für eine Helligkeitsänderung, indem das Licht auf dem Überwachungsbereich 12 abgeschirmt oder durchgelassen wird. Die Erwartungshaltung kann hier sogar noch für bestimmte Bereiche von Pixelelementen konkretisiert werden, zu welchem Zeitpunkt innerhalb der Bewegung des Verschlusses der Stimulus tatsächlich auftritt.

Ein weiterer alternativer Stimulus ist die mechanische Bewegung des Bildsensors 14 oder eines optischen Elements in dessen Strahlengang, insbesondere des Objektivs 16. Ähnlich einem mechanischen Bildstabilisator werden dem Bildsensor 14 mechanische Stöße in X- beziehungsweise Y-Richtung versetzt. Dadurch werden Objektpunkte auf andere Pixelelemente abgebildet. Ein vergleichbarer Effekt tritt bei Bewegung des Objektivs 16 oder von Elementen des Objektivs 16 auf. Für diese Art der Diagnose ist ein rückwärts telezentrisches Objektiv besonders vorteilhaft. Als weitere Alternative zu einer Translationsbewegung von Bildsensor 14 oder Objektiv 16 ist eine Fokusverstellung des Objektivs 16 vorstellbar, sei es durch Verschiebungen längs der optischen Achse mit einem Motor, einer Tauchspule oder einer Piezoaktorik oder direkte Änderung der Brennweite wie bei einer Flüssigkeitslinse. Weiterhin ist denkbar, zusätzliche optische Elemente im Strahlengang des Bildsensors 14 anzuordnen, etwa ein Spiegelelement, und dieses zu bewegen. Alle diese Änderungen sind sehr gut reproduzierbar und können zu definierten Zeitpunkten ausgelöst werden, um damit das Zeitverhalten der Pixelelemente verlässlich zu testen.

In einer weiteren Ausführungsform können Pixelelemente, insbesondere mindestens eine Zeile und/oder Spalte des Bildsensors 14 abgedunkelt werden. Das wird bei manchen herkömmlichen Bildsensoren genutzt, um das Rauschverhalten zu analysieren. Dabei treten im herkömmlichen Fall Grauwertschwankungen auf. Ein abgedunkeltes ereignisbasiertes Pixelelement erzeugt ebenfalls rauschartig Ereignisse, sofern die Ereignisschwelle in den Bereich des typischen Rauschens der Photodiode des Pixelelements herabgesetzt wird. Ändert sich dann die Rauschstatistik der Zeitintervalle von ausgelösten Ereignissen für mindestens ein, vorzugsweise gleich eine größere Anzahl von abgedunkelten Pixelelementen, so ist anzunehmen, dass der gesamte Bildsensor 14 sich nicht normal verhält und dies sicherheitsrelevante Auswirkungen haben könnte.

Mit einem ähnlichen Ansatz können auch nicht abgedunkelte Pixelelemente erkannt werden, die aufgrund eines Fehlers Ereignisse auslösen, die mit der Szenerie in dem Überwachungsbereich 12 gar nichts zu tun haben. Erneut wird eine ("Rausch")-Statistik der Zeitintervalle aufgestellt, mit denen ein Pixelelement Ereignisse liefert, wobei dies natürlich nicht mehr reines Rauschen ist, sondern sich mit tatsächlichen Beobachtungen überlagert beziehungsweise das Rauschen aufgrund einer höheren Ereignisschwelle sogar nur noch einen untergeordneten Beitrag liefert. Signifikante Abweichungen von dieser Statistik deuten auf einen Defekt hin, insbesondere wenn ein Pixelelement mit einer weitgehend konstanten Ereignisfrequenz Ereignisse erzeugt oder gar keine Ereignisse mehr erzeugt. Dieser Fehler ist ähnlich einem dauerhaft dunklen oder hellen herkömmlichen Pixelelement (Stuck-at-Fehler).

In einer weiteren Ausführungsform wird die Chronologie der von den Pixelelementen erfassten Ereignisse geprüft. Die von dem Bildsensor 14 übergebenen Daten sind jeweils mit einem Zeitstempel versehen. Bei intaktem Bildsensor 14 ist zu erwarten, dass die Ereignisse entsprechend der Zeitstempel chronologisch geordnet eintreffen. Ein in abweichender zeitlicher Abfolge eintreffendes Ereignis deutet auf ein zumindest in diesem Augenblick nicht verlässlich arbeitendes Pixelelement hin. Treten solche Abweichungen gehäuft auf, so ist davon auszugehen, dass der Bildsensor 14 eine sicherheitsrelevante Degradation erlitten hat.

Eine besondere Chronologie kann auch durch den Stimulus vorgegeben werden, wenn diese die zu testenden Pixelelemente nicht gleichzeitig, sondern in einer bestimmten Abfolge trifft. Ein Beispiel ist das oben schon erwähnte Schließen oder Öffnen eines Verschlusses. Solche Bewegungen können aber auch mit einer etwas aufwändigeren Testlichtquelle 28 emuliert werden. Das ermöglicht noch feinere Funktionstests.

Nach einer weiteren Plausibilitätsüberlegung ist zu erwarten, dass eine Intensitätsänderung im Überwachungsbereich 12 mehrere benachbarte Pixelelemente betrifft, die deshalb innerhalb eines Zeitfensters gemeinsam ein On-Event oder ein Off-Event liefern sollten. Bleibt diese gemeinsame Reaktion aus, so bedeutet das bei einmaligem Auftreten noch keinen Defekt, aber ein isoliertes Ereignis kann als Rauschereignis anders behandelt werden. Wenn ein Pixelelement über einen längeren Zeitraum isoliert Ereignisse meldet, ist es wahrscheinlich doch defekt.

Die vorgestellten Funktionstests sind miteinander kombinierbar, um einen noch höheren Diagnosegrad zu erzielen. Sie können in Echtzeit durchgeführt werden. Neben zyklischen Tests ist auch ein Test auf Anfrage denkbar, insbesondere ein sogenannter Test vor Anforderung in Vorbereitung auf eine sicherheitsrelevante Situation. Je mehr Statistik in einen Funktionstest einfließt, beispielsweise bei der Prüfung von Rauschstatistiken, desto größer wird dessen Ansprechzeit, und manchmal verhindert dies eine Anwendung in Echtzeit oder in kurzen Zyklen, wo dann auf eine Alternative ergänzt werden kann.

Sind jeweils einzelne defekte Pixelelemente erkannt worden, so können sie entsprechend markiert werden. Dabei kann zwischen dauerhaften Defekten (hard errors) und transienten Effekten (soft errors) unterschieden werden. Ein mögliches Kriterium für einen nicht mehr erfolgreichen Funktionstest ist, dass eine bestimmte Grenzanzahl defekter Pixelelemente überschritten ist. Dabei kann aber auch deren Ortsverteilung eine Rolle spielen. Isolierte Pixelelemente sind meist eher zu tolerieren. Wird ein defektes Pixelcluster vergleichbar groß wie die zu detektierenden Objekte festgestellt, so ist das in aller Regel sicherheitsrelevant. Pixelelemente, die einen nicht sicherheitsrelevanten Teil des Überwachungsbereichs 12 beispielsweise außerhalb von Schutzfeldern beobachten, dürfen aber üblicherweise defekt sein, auch in größerer Anzahl und Häufung. Sie stellen andererseits einen Indikator dar, dass der Bildsensor 14 insgesamt auszufallen droht. Sollte der Funktionstest einen sicherheitsrelevanten Fehler feststellen, so ist der Sicherheitssensor nicht mehr einsatzfähig, und die überwachte Maschine wird über ein entsprechendes Absicherungssignal an dem sicheren Ausgang 20 in einen sicheren Zustand versetzt.

## Patentansprüche

1. Optoelektronischer Sensor (10), der einen Bildsensor (14) mit einer Vielzahl von Pixelelementen zum Erzeugen von Bilddaten und eine Steuer- und Auswertungseinheit (18) zum Auswerten der Bilddaten sowie zur Durchführung eines Funktionstests des Bildsensors (14) aufweist, bei dem die Pixelelemente mit einem Stimulus angeregt werden und die Reaktion der Pixelelemente mit einer Erwartungshaltung verglichen wird,
**dadurch gekennzeichnet,**
**dass** der optoelektronische Sensor (10) zum Erzeugen des Stimulus eine Testbeleuchtungseinrichtung (28) zum Erzeugen einer Intensitätsänderung oder eines Intensitätssprungs des auf den Bildsensor (14) fallenden Empfangslichts aufweist und zum Absichern einer Maschine (24) ist,
**dass** die Steuer- und Auswertungseinheit (18) dafür ausgebildet ist, ein Absicherungssignal an die überwachte Maschine (24) auszugeben wenn der Funktionstest scheitert,
**dass** der Bildsensor (14) ein ereignisbasierter Bildsensor ist,
und **dass** in der Steuer- und Auswertungseinheit (18) als Erwartungshaltung gespeichert ist, nach welcher Zeit ab einer Intensitätsänderung durch die Testbeleuchtung (28) wie viele Pixelelemente ein Ereignis registriert haben und/oder ein bestimmtes Pixelelement ein Ereignis registriert und/oder bei welcher Intensitätsdifferenz durch die Testbeleuchtung (28) wie viele Pixelelemente ein Ereignis registriert haben und/oder ein bestimmtes Pixelelement ein Ereignis registriert.

2. Sensor (10) nach Anspruch 1,
der einen sicheren Ausgang (20) zur Ausgabe des Absicherungssignals aufweist.

3. Sensor (10) nach Anspruch 1 oder 2,
wobei ein jeweiliges Pixelelement feststellt, wenn sich die von dem Pixelelement erfasste Intensität ändert, und genau dann ereignisbasiert eine Bildinformation liefert, wobei insbesondere das Pixelelement als Bildinformation eine differentielle Information liefert, ob sich die Intensität verringert oder erhöht hat, oder eine integrierte Intensität in einem durch eine Änderung der Intensität bestimmten Zeitfenster liefert.

4. Sensor (10) nach einem der vorhergehenden Ansprüche,
wobei die Steuer- und Auswertungseinheit (18) dafür ausgebildet ist, bei dem Funktionstest zu messen, wann ein bestimmtes Pixelelement ab einer Intensitätsänderung ein Ereignis registriert und/oder die Pixelelemente zu zählen, die zum jeweiligen Zeitpunkt ein Ereignis registrieren.

5. Sensor (10) nach einem der vorhergehenden Ansprüche,
wobei die Steuer- und Auswertungseinheit (18) dafür ausgebildet ist, bei dem Funktionstest zu messen, ob ein bestimmtes Pixelelement auf eine bestimmte Intensitätsdifferenz hin ein Ereignis registriert und/oder die Pixelelemente zu zählen, die auf eine bestimmte Intensitätsdifferenz hin ein Ereignis registrieren.

6. Sensor (10) nach einem der vorhergehenden Ansprüche,
wobei die Steuer- und Auswertungseinheit (18) dafür ausgebildet ist, bei einer kontinuierlichen Intensitätsänderung zu zählen, wie oft ein Pixelelement ein Ereignis auslöst, und dies mit einer bei der gleichen Intensitätsänderung zuvor bestimmten Anzahl zu vergleichen, insbesondere bei einer kontinuierlichen Intensitätsänderung oder Rampe von dunkel nach hell und zurück.

7. Sensor (10) nach einem der vorhergehenden Ansprüche,
wobei dem Bildsensor (14) ein Verschluss vorgeordnet ist, wobei in der Steuer- und Auswertungseinheit (18) eine Erwartungshaltung gespeichert ist, wie viele oder welche Pixelelemente und insbesondere in welcher zeitlichen Abfolge bei Betätigen des Verschlusses ein Ereignis registrieren, und wobei während des Funktionstests der Verschluss betätigt wird und die dadurch in den Pixelelementen ausgelösten Ereignisse mit der Erwartungshaltung verglichen werden

8. Sensor (10) nach einem der vorhergehenden Ansprüche,
wobei die Steuer- und Auswertungseinheit (18) dafür ausgebildet ist, als Stimulus den Bildsensor (14) zu bewegen oder ein vorgeordnetes optisches Element (16) zu verändern.

9. Sensor (10) nach einem der vorhergehenden Ansprüche,
wobei die Steuer- und Auswertungseinheit (18) dafür ausgebildet ist, Rauschcharakteristika von Pixelelementen zu prüfen, insbesondere von abgedunkelten Pixelelementen mit auf den Rauschpegel herabgesetzter Ereignisschwelle.

10. Sensor (10) nach einem der vorhergehenden Ansprüche,
wobei die Steuer- und Auswertungseinheit (18) dafür ausgebildet ist, die zeitliche Abfolge der ein Ereignis detektierenden Pixelelemente zu prüfen.

11. Verfahren zum Absichern einer Maschine (24), wobei ein Bildsensor (14) mit einer Vielzahl von Pixelelementen Bilddaten erzeugt und die Bilddaten ausgewertet werden, um zu erkennen, ob sich ein Objekt (26) bezüglich der Maschine (24) in einer gefährlichen Situation befindet, und wobei ein Funktionstest des Bildsensors (14) durchgeführt wird, bei dem die Pixelelemente mit einem Stimulus angeregt werden und die Reaktion der Pixelelemente mit einer Erwartungshaltung verglichen wird,
**dadurch gekennzeichnet,**
**dass** ein Absicherungssignal an die überwachte Maschine (24) ausgegeben wird wenn der Funktionstest scheitert,
**dass** der Bildsensor (14) ein ereignisbasierter Bildsensor ist,
**dass** mit einer Testbeleuchtungseinrichtung (28) als Stimulus eine Intensitätsänderung oder ein Intensitätssprung des auf den Bildsensor (14) fallenden Empfangslichts erzeugt wird,
und **dass** als Erwartungshaltung gespeichert ist, nach welcher Zeit ab einer Intensitätsänderung wie viele Pixelelemente ein Ereignis registriert haben und/oder ein bestimmtes Pixelelement ein Ereignis registriert und/oder bei welcher Intensitätsdifferenz wie viele Pixelelemente ein Ereignis registriert haben und/oder ein bestimmtes Pixelelement ein Ereignis registriert.

## Claims

1. An optoelectronic sensor (10) comprising an image sensor (14) having a plurality of pixel elements for generating image data and a control and evaluation unit (18) for evaluating the image data and for carrying out a function test of the image sensor (14), wherein the pixel elements are excited with a stimulus and the reaction of the pixel elements is compared with an expectation,
**characterized in that** the optoelectronic sensor (10) for generating the stimulus comprises a test illumination device (28) for generating a change in intensity or a jump in intensity of the received light impinging on the image sensor (14) and is for safeguarding a machine (24),
**in that** the control and evaluation unit (18) is configured to output a safeguarding signal to the monitored machine (24) when the function test fails,
**in that** the image sensor (14) is an event-based image sensor,
and **in that** it is stored in the control and evaluation unit (18) as an expectation after which time from a change in intensity by the test illumination (28) how many pixel elements have registered an event and/or a specific pixel element registers an event and/or
at which difference in intensity by the test illumination (28) how many pixel elements have registered an event and/or a specific pixel element registers an event.

2. The sensor (10) according to claim 1,
that comprises a safe output (20) for outputting the safeguarding signal.

3. The sensor (10) according to claim 1 or 2,
wherein a respective pixel element detects when the intensity detected by the pixel element changes and exactly then provides event-based image information, wherein in particular the pixel element provides as image information differential information whether the intensity has decreased or increased or provides an integrated intensity in a time window determined by a change of the intensity.

4. The censor (10) according to any of the preceding claims,
wherein the control and evaluation unit (18) is configured to measure during the function test when a particular pixel element registers an event following a change in intensity and/or to count the pixel elements which register an event at the respective time.

5. The sensor (10) according to any of the preceding claims,
wherein the control and evaluation unit (18) is configured to measure during the function test whether a particular pixel element registers an event in response to a particular intensity difference and/or to count the pixel elements that register an event in response to a particular intensity difference.

6. The sensor (10) according to any of the preceding claims,
wherein the control and evaluation unit (18) is configured to count, in the case of a continuous intensity change, how often a pixel element triggers an event, and to compare this with a previously determined number in the case of the same intensity change, in particular in the case of a continuous intensity change or ramp from dark to light and back.

7. The sensor (10) according to any of the preceding claims,
wherein a shutter is arranged upstream of the image sensor (14), wherein an expectation is stored in the control and evaluation unit (18) as to how many or which pixel elements, and in particular in which time sequence, register an event when the shutter is actuated, and wherein the shutter is actuated during the function test and the events thereby triggered in the pixel elements are compared with the expectation

8. The sensor (10) according to any of the preceding claims,
wherein the control and evaluation unit (18) is configured to move the image sensor (14) or to change an upstream optical element (16) as a stimulus.

9. The sensor (10) according to any of the preceding claims,
wherein the control and evaluation unit (18) is configured to check noise characteristics of pixel elements, in particular of darkened pixel elements with the event threshold lowered to the noise level.

10. The sensor (10) according to any of the preceding claims,
wherein the control and evaluation unit (18) is configured to check the time sequence of the pixel elements detecting an event.

11. A method for safeguarding a machine (24), wherein an image sensor (14) having a plurality of pixel elements generates image data and the image data is evaluated to detect whether an object (26) is in a dangerous situation with respect to the machine (24), and wherein a function test of the image sensor (14) is carried out in which the pixel elements are excited with a stimulus and the reaction of the pixel elements is compared with an expectation,
**characterized in in that** a safeguarding signal is output to the monitored machine (24) if the function test fails,
**in that** the image sensor (14) is an event-based image sensor,
**in that** an intensity change or an intensity jump of the received light impinging on the image sensor (14) is generated with a test illumination device (28) as stimulus,
and **in that** it is stored as an expectation after which time from an intensity change how many pixel elements have registered an event and/or a specific pixel element registers an event and/or
at which intensity difference how many pixel elements have registered an event and/or a specific pixel element registers an event.

## Revendications

1. Capteur optoélectronique (10) comprenant un capteur d'images (14) avec une pluralité d'éléments de pixel pour générer des données d'image et une unité de commande et d'évaluation (18) pour évaluer les données d'image et pour effectuer un test de fonctionnement du capteur d'images (14), dans lequel les éléments de pixel sont excités par un stimulus et la réaction des éléments de pixel est comparée à une attente,
**caractérisé en ce que** le capteur optoélectronique (10) pour générer le stimulus comprend un dispositif d'éclairage de test (28) destiné à générer une modification d'intensité ou un saut d'intensité de la lumière reçue tombant sur le capteur d'images (14) et sert à sécuriser une machine (24),
**en ce que** l'unité de commande et d'évaluation (18) est configurée pour délivrer un signal de sécurisation à la machine surveillée (24) lorsque le test de fonctionnement échoue,
**en ce que** le capteur d'images (14) est un capteur d'images basé sur des événements,
et **en ce que** dans l'unité de commande et d'évaluation (18) est mémorisé comme attente, après quel temps à partir d'une modification d'intensité par l'éclairage de test (28) combien d'éléments de pixel ont enregistré un événement et/ou un élément de pixel déterminé a enregistré un événement et/ou à quelle différence d'intensité par l'éclairage de test (28) combien d'éléments de pixel ont enregistré un événement et/ou un élément de pixel déterminé a enregistré un événement.

2. Capteur (10) selon la revendication 1,
qui comprend une sortie de sécurité (20) pour délivrer le signal de sécurité.

3. Capteur (10) selon la revendication 1 ou 2,
dans lequel un élément de pixel respectif détecte lorsque l'intensité détectée par l'élément de pixel change et fournit alors exactement des informations d'image basées sur des événements, dans lequel en particulier l'élément de pixel fournit comme informations d'image des informations différentielles indiquant si l'intensité a diminué ou augmenté ou fournit une intensité intégrée dans une fenêtre de temps déterminée par un changement de l'intensité.

4. Capteur (10) selon l'une des revendications précédentes,
dans lequel l'unité de commande et d'évaluation (18) est configurée pour mesurer pendant le test de fonctionnement, le moment où un élément de pixel particulier enregistre un événement suite à un changement d'intensité et/ou pour compter les éléments de pixel qui enregistrent un événement au moment respectif.

5. Capteur (10) selon l'une des revendications précédentes,
dans lequel l'unité de commande et d'évaluation (18) est configurée pour mesurer pendant le test de fonctionnement si un élément de pixel particulier enregistre un événement en réponse à une différence d'intensité particulière et/ou pour compter les éléments de pixel qui enregistrent un événement en réponse à une différence d'intensité particulière.

6. Capteur (10) selon l'une des revendications précédentes,
dans lequel l'unité de commande et d'évaluation (18) est configurée pour compter, lors d'une variation d'intensité continue, la fréquence à laquelle un élément de pixel déclenche un événement, et pour comparer celle-ci avec un nombre préalablement déterminé lors de la même modification d'intensité, en particulier dans le cas d'une modification d'intensité continue ou d'une rampe de l'obscurité vers la lumière et inversement.

7. Capteur (10) selon l'une des revendications précédentes,
dans lequel un obturateur est disposé en amont du capteur d'images (14), dans lequel une attente est mémorisée dans l'unité de commande et d'évaluation (18) combien ou quels éléments de pixels, et en particulier dans quelle séquence temporelle enregistrent un événement lorsque l'obturateur est actionné, et dans lequel l'obturateur est actionné pendant le test de fonctionnement et les événements ainsi déclenchés dans les éléments de pixels sont comparés à l'attente.

8. Capteur (10) selon l'une des revendications précédentes,
dans lequel l'unité de commande et d'évaluation (18) est configurée pour déplacer le capteur d'images (14) ou pour modifier un élément optique amont (16) en tant que stimulus.

9. Capteur (10) selon l'une des revendications précédentes,
dans lequel l'unité de commande et d'évaluation (18) est configurée pour vérifier les caractéristiques de bruit des éléments de pixel, en particulier des éléments de pixel obscurcis avec le seuil d'événement abaissé au niveau de bruit.

10. Capteur (10) selon l'une des revendications précédentes,
dans lequel l'unité de commande et d'évaluation (18) est configurée pour vérifier la séquence temporelle des éléments de pixel détectant un événement.

11. Procédé de sécurisation d'une machine (24), dans lequel un capteur d'images (14) avec une pluralité d'éléments de pixels génère des données d'image et les données d'image sont évaluées pour détecter si un objet (26) se trouve dans une situation dangereuse par rapport à la machine (24), et dans lequel un test de fonctionnement du capteur d'images (14) est effectué, dans lequel les éléments de pixels sont excités par un stimulus et la réaction des éléments de pixels est comparée à une attente,
**caractérisé en ce qu'**un signal de sécurisation est délivré à la machine surveillée (24) lorsque le test de fonctionnement échoue,
**en ce que** le capteur d'images (14) est un capteur d'images basé sur des événements,
**en ce qu'**une modification d'intensité ou un saut d'intensité de la lumière reçue tombant sur le capteur d'images (14) est généré avec un dispositif d'éclairage de test (28) en tant que stimulus,
et **en ce qu'**il est stocké en tant qu'attente après quel temps à partir d'une modification d'intensité combien d'éléments de pixel ont enregistré un événement et/ou un élément de pixel determiné enregistre un événement et/ou
à quelle différence d'intensité combien d'éléments de pixel ont enregistré un événement et/ou un élément de pixel determiné enregistre un événement.
